# DEMANDE DE BREVET EUROPEEN

(11) **EP 1 038 928 A1**
(43) Date de publication de la demande: **27.09.2000**
(21) Numéro de dépôt: 00400817.3
(22) Date de dépôt: 24.03.2000
(51) Int. Cl.: C09D 9/00

(54) **Composition décapante, utilisable notamment dans le domaine du bâtiment**

(30) Priorité: 25.03.1999 FR 9903746
(71) Demandeur: Elf Atochem S.A., 92800 Puteaux (FR)
(72) Inventeur: Lallier, Jean-Pierre, 95220 Herblay (FR)
(74) Mandataire: Chaillot, Geneviève

(57) **Abrégé**

Composition décapante, utilisable notamment dans le domaine du bâtiment, en particulier pour le décapage des peintures, crépis et résidus de colles, caractérisée par le fait qu'elle est constituée par ou qu'elle comprend :
(A) au moins une charge inorganique à caractère épaississant ;
(B) au moins un ester dibasique ;
(C) au moins un solvant aprotique dipolaire ; et
(D) au moins un additif choisi parmi les épaississants cellulosiques, la silice pyrogénée et les agents dispersants,
le constituant (A) représentant au moins 40 parties en poids pour 100 parties en poids de (A)+(B)+(C).

## Description

La présente invention porte sur une composition décapante, utilisable notamment dans le domaine du bâtiment, en particulier pour le décapage des peintures et des crépis, par exemple des peintures et crépis acryliques, ou pour le décapage des résidus de colles, par exemple des résidus de colles de moquettes ou de dallages.

Dans le secteur du bâtiment, la plupart des décapants pour peintures sont à base de chlorure de méthylène additivé de méthanol. Ils sont généralement épaissis par des composés cellulosiques et peuvent contenir une charge minérale, telle que la silice ou le carbonate de calcium, comme additif en faible proportion.

Cependant, on cherche de plus en plus à remplacer le chlorure de méthylène en raison de ses très fortes volatilité et nocivité. Les produits de remplacement du mélange synergique chlorure de méthylène-méthanol existent, mais ils sont, en général, beaucoup plus chers et entrent à au moins 90% en poids de la constitution de la formulation. Les 10% restants sont constitués par l'épaississant (le plus souvent choisi parmi les dérivés cellulosiques ou acryliques), lui-même, généralement encore plus cher que les solvants et les divers additifs : activateur, tensio-actif, inhibiteur de corrosion.

De nombreux brevets relatifs à des formulations de décapage pour peintures citent la présence de matériaux inorganiques (le plus souvent poudre minérale) mais en faible proportion dans la formulation (inférieure à 20% en poids et le plus souvent en quantité inférieure ou égale à 5% en poids). Cet ajout de poudre minérale (silice, silice pyrogénée, argile, bentonite, carbonate de calcium, etc...) a toujours pour fonction une optimisation de la rhéologie, notamment l'obtention d'une formulation thixotrope. (On dit qu'il y a thixotropie lorsque, après un long repos, un gradient de vitesse ou une contrainte étant appliqué brusquement puis maintenu fixe, la viscosité apparente est décroissante de la durée d'écoulement). En règle générale, le composé inorganique est donc associé à un épaississant classique de type organique (cellulosique, acrylique, etc...). Généralement, l'épaississant est plus coûteux que les solvants ou autres additifs. Il est donc d'usage d'incorporer dans les formulations la quantité minimum d'épaississant permettant d'obtenir l'épaississement souhaité.

La Société déposante a cependant découvert que, si l'on utilise un système épaississant constitué par ou comprenant une charge minérale, on peut l'associer en une proportion importante avec un mélange ester(s) dibasique(s) / solvant(s) aprotique(s) polaire(s), pour parvenir à une composition décapante bon marché, directement ajustable à la viscosité souhaitée avec le maximum d'épaississant.

Par ailleurs, pour rehausser l'efficacité de la composition décapante, on peut avantageusement choisir la charge minérale qu'elle doit contenir en fonction du substrat sur lequel se trouve la peinture, le crépi ou la colle à décaper, de façon à obtenir une bonne affinité de la composition décapante avec le substrat, et/ou en fonction des charges minérales de la peinture ou du crépi à décaper, de façon à obtenir une bonne compatibilité de ladite peinture ou dudit crépi avec la composition décapante.

La présente invention a donc pour objet une composition décapante, utilisable notamment dans le domaine du bâtiment, en particulier pour le décapage des peintures, crépis et résidus de colles, caractérisée par le fait qu'elle est constituée par ou qu'elle comprend :
(A) au moins une charge inorganique à caractère épaississant ;
(B) au moins un ester dibasique ;
(C) au moins un solvant aprotique dipolaire ; et
(D) au moins un additif choisi parmi les épaississants cellulosiques, la silice pyrogénée et les agents dispersants,
le constituant (A) représentant au moins 40 parties en poids pour 100 parties en poids de (A)+(B)+(C).

La composition selon l'invention peut être constituée par ou comprendre, pour 100 parties en poids de (A)+(B)+ C):
- 40 à 80, en particulier 45 à 70, parties en poids de (A) ;
- 10 à 50, en particulier 20 à 40, parties en poids de (B) ; et
- 5 à 20, en particulier 5 à 15, parties en poids de (C).

Par charge inorganique (A) à caractère épaississant, on entend une poudre inorganique, naturelle ou synthétique pouvant conduire à des formulations dont la viscosité est de l'ordre de 6000 mPa.s à 20 tours/min. ou 2000 mPa.s à 100 tours/min.

La ou les charges inorganiques (A) ont, d'une manière générale, une granulométrie moyenne comprise entre 0,1 et 200 µm, plus particulièrement entre 1 et 100 µm. Une granulométrie plus fine permet d'obtenir la même viscosité en utilisant moins de charge, ce qui n'est pas économiquement souhaitable.

A titre d'exemple de charges inorganiques (A), on peut citer le carbonate de calcium, la silice, le phosphite de calcium, l'hydroxyde de calcium (Ca(OH)₂), l'argile, la bentonite. On a observé une très grande efficacité de la composition de la présente invention contenant du carbonate de calcium ou du phosphite de calcium en tant que constituant (A) pour le décapage de crépis acryliques de façades très fortement chargées en carbonate de calcium.

Le ou les esters dibasiques (B) sont notamment choisis parmi les esters dibasiques aliphatiques, en particulier les diesters d'alkyle en C₁-C₄ d'un ou plusieurs acides dibasiques aliphatiques en C₄-C₆. On peut citer en particulier le succinate de diméthyle, le glutarate de diméthyle, l'adipate de diméthyle et leurs mélanges.

Quant aux solvants aprotiques dipolaires (C), ils sont avantageusement choisis parmi le diméthylsulfoxyde, la N-méthyloyrrolidone, le diméthylformamide, l'acétonitrile, la N-méthylmorpholine, la γ-butyrolactone et le diméthylacétamide. Le diméthylsulfoxyde et la N-méthyl pyrrolidone sont préférés.

La composition décapante selon l'invention comprend en outre :
- au moins un épaississant cellulosique, à raison notamment de 0,05 à 0,5 partie en poids, en particulier de 0,1 à 0,3 partie en poids, pour 100 parties en poids de (A)+(B)+(C) ; et/ou ;
- au moins un épaississant inorganique constitué par la silice pyrogénée, à raison notamment de 0,1 à 5 parties en poids, en particulier de 0,5 à 3 parties en poids, pour 100 parties en poids de (A)+(B)+(C) ; et/ou
- au moins un agent dispersant, à raison notamment de 0,1 à 10 parties en poids, en particulier de 0,5 à 2 parties en poids, pour 100 parties en poids de (A)+(B)+(C).

Comme exemple d'épaississant cellulosique, on peut citer le METHOCELL 311 commercialisé par la Société "DOW CHEMICAL Co", dont le procédé d'obtention est décrit dans le brevet américain US-A-3 388 082 intitulé "Hydroxypropyl methyl cellulose ethers".

Comme exemple d'agent dispersant, on peut citer l'ester phosphorique acide du 2-éthylhexanol, commercialisé par la Société "CECA" sous la dénomination "BEYCOSTAT A081".

La composition décapante selon l'invention peut en outre contenir au moins un agent lui procurant une odeur agréable, à raison notamment de 1 à 10 parties en poids pour 100 parties en poids de (A) + (B) + (C), et/ou au moins un activateur, tel que le D-limonène, à raison notamment de 1 à 15 parties en poids pour 100 parties en poids de (A)+(B)+(C).

La composition décapante de l'invention s'est avérée être très intéressante ; en effet, après qu'on l'ait appliquée puis laissé agir pendant quelques heures, il suffit de pousser les lambeaux secs à l'aide d'une spatule de peintre. On évite des résidus humides, collants, toujours difficiles à éliminer et à traiter, et on obtient la plupart du temps un substrat propre, tel que mur en béton ou en brique.

Les Exemples suivants illustrent la présente invention sans toutefois en limiter la portée. Dans ces exemples, les ingrédients utilisés étaient les suivants :
(A) Charge inorganique
   - CaCO₃ n° 1 = Carbonate de calcium précipité, ayant une granulométrie moyenne de 40 µm, commercialisé par la Société "PROLABO" sous la dénomination "RECTAPUR"
   - CaCO₃ n° 2 = Carbonate de calcium naturel, ayant une granulométrie moyenne de 40 µm, commercialisé par la Société "OMYA" sous la dénomination "DURCAL 40"
   - CaHPO₃ = phosphite de calcium naturel, produit par la Société "CECA"
(B) Ester dibasique
   - DBE = ester dibasique ayant la composition suivante (en % en poids) : adipate de diméthyle/glutarate de diméthyle/succinate de diméthyle : 15/ 62/ 23, commercialisé par la Société "RHÔNE-POULENC" sous la dénomination "RPDE"

### Additifs

- Silice pyrogénée = silice pyrogénée ayant une masse volumique égale à 2,2 g/cm³ commercialisée par la Société "DEGUSSA" sous la dénomination "AEROSIL 0X 50"
- Epaississant cellulosique = épaississant cellulosique commercialisé par la Société "DOW CHEMICAL Co." sous la dénomination "METHOCELL 311"
- Agent dispersant = ester phosphorique acide du 2-éthylhexanol, commercialisé sous la dénomination "BEYCOSTAT A081"

Dans ces Exemples, toutes les proportions citées sont en parties en poids.

### EXEMPLE DE PRÉPARATION 1

On a préparé la formulation suivante :
- CaCO₃ n°1 53,75
- DBE 35,50
- Diméthyl sulfoxyde 10,75
- Silice pyrogénée 2
- Epaississant cellulosique 0,2

Toute la préparation se fait à température ambiante (25°C) et sous agitation (environ 400 tours/min), avec, de préférence, une turbine permettant une dispersion de solides dans les liquides. Les solvants sont introduits d'abord. Puis on ajoute le carbonate de calcium. A ce stade, le mélange n'est pas homogène. Toujours sous agitation, on introduit la silice pyrogénée et l'épaississant cellulosique.

### EXEMPLE DE PRÉPARATION 2

On a procédé comme à l'Exemple 1, excepté que l'on a remplacé CaCO₃ n° 1 par CaCO₃ n° 2.

### EXEMPLE DE PREPARATION 3

On a procédé comme à l'Exemple 2, excepté que l'on a incorporé à la formulation, en fin de préparation, 5,38 parties en poids d'un mélange de terpènes constitué essentiellement de paramenthadiènes et de dérivés d'alpha-pinènes, commercialisé par la Société "SPCI" sous la dénomination "TERSOL S".

On obtient alors un produit décapant, lequel, au . lieu d'être inodore comme celui de l'Exemple 2, présente une odeur agréable de note fraîcheur de pin.

### EXEMPLES DE PREPARATION 4 à 7

On a préparé les formulations suivantes :

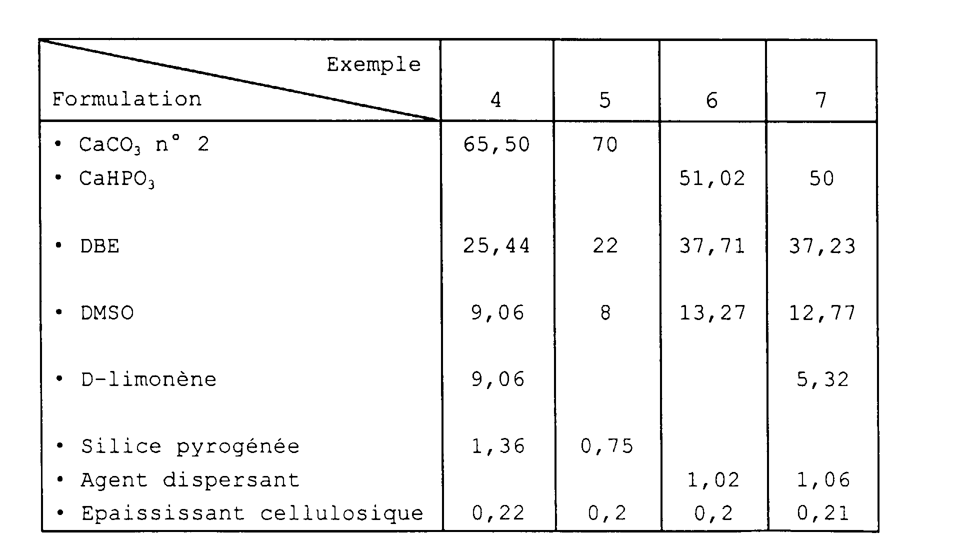

On a procédé comme à l'Exemple 1, la silice pyrogénée, l'agent dispersant, l'épaississant cellulosique et le D-limonène étant introduits en dernier.

### EXEMPLE D'APPLICATION 8

On a appliqué la composition décapante de chacun des Exemples 1 à 7 sur des substrats en béton, sur lesquels subsistaient des résidus de colle des moquettes ou dallages qui avaient été posés initialement, et que l'on avait été amené à retirer par exemple pour les changer.

Les compositions décapantes ont été appliquées à la brosse en insistant sur les parties comportant les résidus de colle, avec une épaisseur d'environ 0,5 mm.

Après 6 heures de contact, (2 heures dans le cas des compositions des Exemples 4 et 7) on a effectué un raclage à l'aide d'une spatule, ce qui a permis la mise à nu des substrats en béton.

### EXEMPLE D'APPLICATION 9

On a appliqué au rouleau sur une épaisseur d'environ 0,5 mm, la composition décapante de chacun des Exemples 1 à 7 sur une peinture acrylique qui était appliquée comme revêtement d'une façade en brique.

Au bout de 3 heures de contact, on a effectué un raclage à l'aide d'une spatule, ce qui a permis l'obtention de lambeaux secs de peinture et la mise à nu du substrat de brique.

## Revendications

1. Composition décapante, utilisable notamment dans le domaine du bâtiment, en particulier pour le décapage des peintures, crépis et résidus de colles, caractérisée par le fait qu'elle est constituée par ou qu'elle comprend :
(A) au moins une charge inorganique à caractère épaississant ;
(B) au moins un ester dibasique ;
(C) au moins un solvant aprotique dipolaire ; et
(D) au moins un additif choisi parmi les épaississants cellulosiques, la silice pyrogénée et les agents dispersants,
le constituant (A) représentant au moins 40 parties en poids pour 100 parties en poids de (A)+(B)+(C).

2. Composition décapante selon la revendication 1, caractérisée par le fait qu'elle est constituée par ou qu'elle comprend, pour 100 parties en poids de (A)+(B)+ C):
- 40 à 80 parties en poids de (A) ;
- 10 à 50 parties en poids de (B) ; et
- 5 à 20 parties en poids de (C).

3. Composition décapante selon la revendication 2, caractérisée par le fait qu'elle est constituée par ou qu'elle comprend, pour 100 parties en poids de (A)+ B)+(C):
- 45 à 70 parties en poids de (A) ;
- 20 à 40 parties en poids de (B) ; et
- 5 à 15 parties en poids de (C).

4. Composition décapante selon l'une des revendications 1 à 3, caractérisée par le fait que la ou les charges inorganiques (A) ont une granulométrie moyenne comprise entre 0,1 et 200 µm.

5. Composition décapante selon l'une des revendications 1 à 4, caractérisée par le fait que la ou les charges inorganiques (A) sont choisies parmi le carbonate de calcium, la silice, le phosphite de calcium, l'hydroxyde de calcium (Ca(OH)₂), l'argile, la bentonite.

6. Composition décapante selon l'une des revendications 1 à 5, caractérisée par le fait que le ou les esters dibasiques (B) sont choisis parmi les esters dibasiques aliphatiques, en particulier les diesters d'alkyle en C₁-C₄ d'un ou plusieurs acides dibasiques aliphatiques en C₄-C₆.

7. Composition décapante selon la revendication 6, caractérisée par le fait que le ou les esters dibasiques (B) sont choisis parmi le succinate de diméthyle, le glutarate de diméthyle, l'adipate de diméthyle et leurs mélanges.

8. Composition décapante selon l'une des revendications 1 à 7, caractérisée par le fait que le ou les solvants aprotiques dipolaires (C) sont choisis parmi le diméthylsulfoxyde, la N-méthylpyrrolidone, le diméthylformamide, l'acétonitrile, la N-méthylmorpholine, la γ-butyrolactone et le diméthylacétamide.

9. Composition décapante selon l'une des revendications 1 à 8, caractérisée par le fait qu'elle contient en outre au moins un épaississant cellulosique à raison de 0,05 à 0,5 partie en poids, en particulier de 0,1 à 0,3 partie en poids, pour 100 parties en poids de (A)+(B)+(C), et/ou au moins un épaississant inorganique constitué par la silice pyrogénée, à raison de 0,1 à 5 parties en poids, en particulier de 0,5 à 3 parties en poids, pour 100 parties en poids de (A)+(B)+(C), et/ou au moins un agent dispersant, à raison de 0,1 à 10 parties en poids, en particulier de 0,5 à 2 parties en poids, pour 10 parties en poids de (A)+(B)+(C).

10. Composition décapante selon la revendication 9, caractérisée par le fait que l'agent dispersant est l'ester phosphorique acide du 2-éthylhexanol.

11. Composition décapante selon l'une des revendications 1 à 10, caractérisée par le fait qu'elle contient en outre au moins un agent procurant une odeur agréable à ladite composition, à raison notamment de 1 à 10 parties en poids, pour 100 parties en poids de (A)+(B)+(C).

12. Composition décapante selon l'une des revendications 1 à 11, caractérisée par le fait qu'elle contient en outre au moins un activateur, à raison notamment de 1 à 15 parties en poids, pour 100 parties en poids de (A)+(B)+(C).

13. Composition décapante selon la revendication 12, caractérisée par le fait que l'activateur est le D-limonène.
